# EUROPEAN PATENT SPECIFICATION

(11) **EP 2 872 699 B1**
(45) Date of publication and mention of the grant of the patent: **21.02.2018**
(21) Application number: 12880981.1
(22) Date of filing: 11.07.2012
(51) Int. Cl.: E02B 3/26

(54) **A MARITIME FENDER AND ASSOCIATED METHOD OF MAINTENANCE**
SCHIFFSFENDER UND WARTUNGSVERFAHREN DAFÜR
DÉFENSE MARITIME ET PROCÉDÉ D'ENTRETIEN S'Y RAPPORTANT

(43) Date of publication of application: 20.05.2015
(73) Proprietor: Trelleborg Marine Systems Melbourne Pty Ltd, East Bentleigh, Victoria 3165 (AU)
(72) Inventor: SMITH, Scott, Singapore 248732 (SG)
(74) Representative: Driver, Virginia Rozanne
(86) International application number: PCT/AU2012/000832
(87) International publication number: WO 2014/008525

(56) References cited:
- WO-A1-2006/067237
- WO-A1-2006/125277
- CN-A- 101 428 681
- GB-A- 2 091 376
- KR-B1- 100 641 975
- US-A- 5 361 715

## Description

### Field of the invention

The present invention generally relates to maritime fenders for use on wharves. There is also disclosed a system and method of maintaining maritime fenders.

### Background of the invention

Maritime fenders are used to prevent damage of objects in or close to the water. Berthing structures (e.g. piers, docks, jetties etc) may have outwardly facing fenders to absorb impact between a vessel and the berthing structure.

Typically, fenders are constructed, at least in part, of resilient materials to absorb kinetic energy from the vessel. Fenders also generally include outwardly directed facing elements for contacting berthing vessels. Such facing elements are generally constructed of a material that will not damage the hull of berthing vessels, such as elastomeric rubber or rubber like materials. With use, fender facing elements are sacrificially worn and eventually require repair or replacement. During maintenance of the fenders, the berth becomes temporarily inoperable. For major port facilities, this downtime results in vessels unable to load/unload cargo which can be very costly.

In berthing facilities for large shipping vessels, the fenders may be constructed of multiple components including: a main rubber unit attached to the berthing structure for absorbing kinetic energy from the vessel; a frame attached to the main rubber unit opposite to the berthing structure; and outwardly facing wear pads attached to the frame for contact with vessel hulls. A chain system may be included to support the other components of the fender in position. In use, the chains may be taut (i.e. under tension) to ensure the components of the fender are kept in the desired position and orientation.

It would be desirable to provide fender maintenance methods and/or fender systems which reduce port/berth downtime. In addition, or in the alternative, it would be desirable to provide the public with a useful alternative to existing fender maintenance methods and or fender systems.

US5361715A describes a maritime fender assembly comprising a removable shield secured to a backing plate by a plurality of bosses and bolts. GB2091376A describes an alternative fender assembly.

WO2006067237A1 discloses a height adjustable fender system 1 comprising a fixed structure 3 connected to the edge 2 of the quay of the port and at least one fender 4 for absorbing the energy of a berthing vessel. The fender 4 includes a fender panel 6, a mobile panel 8 and damping elements 5 connecting the fender panel 6 and mobile panel 8. The mobile panel 8 can slide along tracks 12, which are provided on the fixed structure 3, by the actuation of a lifting/lowering mechanism 9. The fender 4 can be locked at different heights, depending on the size of the vessel to be berthed, using a positioning element 10.

Reference to any prior art in the specification is not, and should not be taken as, an acknowledgment or any form of suggestion that this prior art forms part of the common general knowledge in Australia or any other jurisdiction or that this prior art could reasonably be expected to be ascertained, understood and regarded as relevant by a person skilled in the art.

### Summary of the invention

According to a first aspect, the present invention provides a method of maintaining a maritime fender assembly according to claim 1.

According to a second aspect, the present invention provides a maritime fender assembly according to claim 7.

Further aspects of the present invention and further embodiments of the aspects described in the preceding paragraphs will become apparent from the following description, given by way of example and with reference to the accompanying drawings.

### Brief description of the drawings

Figure 1A is a front perspective view of a maritime fender assembly with a removable access platform;
Figure 1B is a front perspective view of the maritime fender assembly;
Figure 2 is a perspective view of the maritime fender assembly with a panel assembly partially removed;
Figure 3 is a perspective view of the maritime fender assembly with one panel assembly completely removed;
Figure 4 is a close up perspective view of the top corner of the maritime fender assembly showing details of the upper portion of the panel assembly and frame;
Figure 5 is a similar perspective view of the maritime fender assembly shown in Figure 4 with the top cover removed and illustrating a bracket assembly;
Figure 6 is a similar perspective view of maritime fender assembly shown in figure 5 with a part of the bracket assembly removed;
Figure 7 is a top view of the maritime fender assembly as shown in figure 6;
Figure 8A is a side view of the maritime fender assembly shown in Figure 1B;
Figure 8B is a front view of the maritime fender assembly shown in figure 1B;
Figure 8C is a top view of the maritime fender assembly shown in figure 1B;
Figure 9A is a perspective view of the removable access platform;
Figure 9B is a perspective view of a gangway for the removable access platform;
Figure 10A is a front view of the panel assembly;
Figure 10B is a front perspective view of the panel assembly;
Figure 10C is a cross-section of the panel assembly of figure 10A along section A-A
Figure 11A is a front view of a panel plate of the panel assembly shown in figure 10A;
Figure 11B is a side view of the panel plate shown in figure 11A;
Figure 11C is a cross-section of the panel plate shown in figure 11A along section A-A;
Figure 11D is a close up view of detail B shown in figure 11B;
Figure 11E is a close up view of detail C shown in figure 11B;
Figure 12A is a front view of a plurality of wear pads of the panel assembly shown in figure 10A;
Figure 12B is a front view of the lower left wear pad shown in figure 12A;
Figure 12C is a top view of the wear pad in figure 12B;
Figure 12D is a cross-section of the wear pad of figure 12B along section A-A;
Figure 12E is a cross-section of the wear pad of figure 12B along section B-B;
Figure 13A is a front view of a frame body of the frame;
Figure 13B is a cross-section of the frame shown in figure 13A along section A-A;
Figure 13C is a cross-section of the frame shown in figure 13A along section B-B;
Figure 13D is a cross-section of the frame shown in figure 13A along section C-C;
Figure 14A is a front view a plurality of inner wear pads of the frame;
Figure 14B is a cross-section of the plurality of inner wear pads in figure 14A along section A-A;
Figure 14C is a close up view of detail B shown in figure 14B;
Figure 14D is a cross-section view of a portion of the frame, showing fasteners securing the inner wear pad to the frame body;
Figure 15 is a top view of a detensioning chain;
Figure 16 is a flow chart depicting the steps involved in removing a panel assembly;
Figure 17 is a flow chart depicting the steps involved in maintaining a panel assembly;
Figure 18 is a flow chart depicting the steps involved in replacing a panel assembly;
Figure 19 is a flow chart depicting the steps involved in maintaining one or more support chains.

### Detailed description of the embodiments

Embodiments of the present invention are directed to systems and methods for maintaining maritime fender systems. In the below, and overview of a fender system and maintenance method in accordance with an embodiment of the invention will be provided, before providing a more detailed description of the physical structure of a fender system according to an embodiment of the invention and a method for maintaining a fender system according to an embodiment to the invention.

### Overview

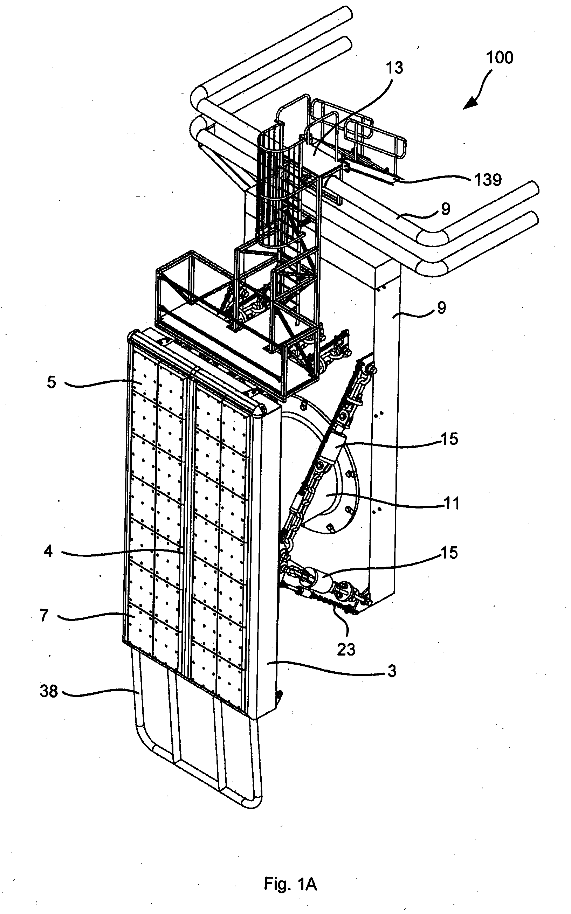

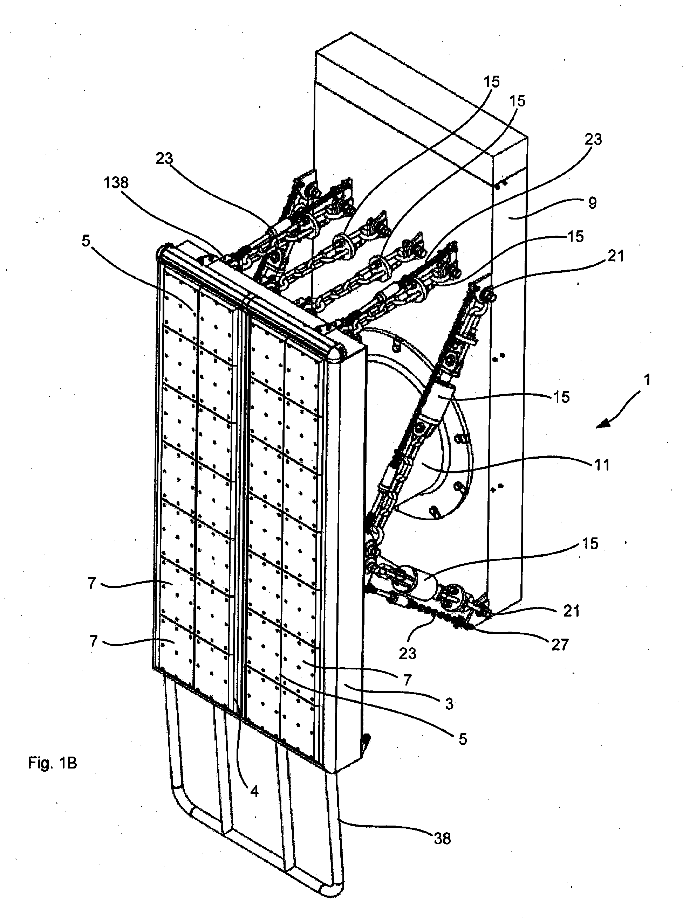

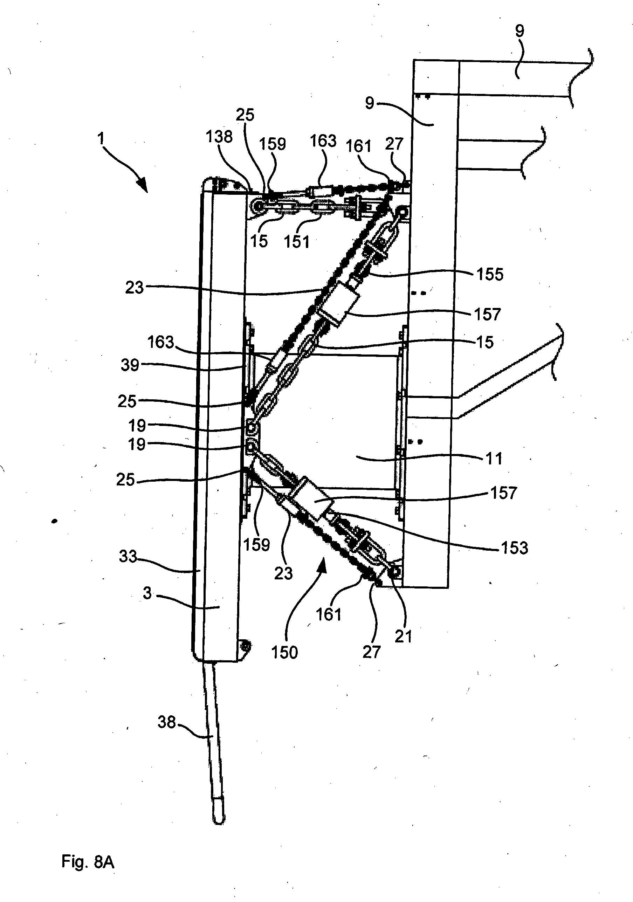

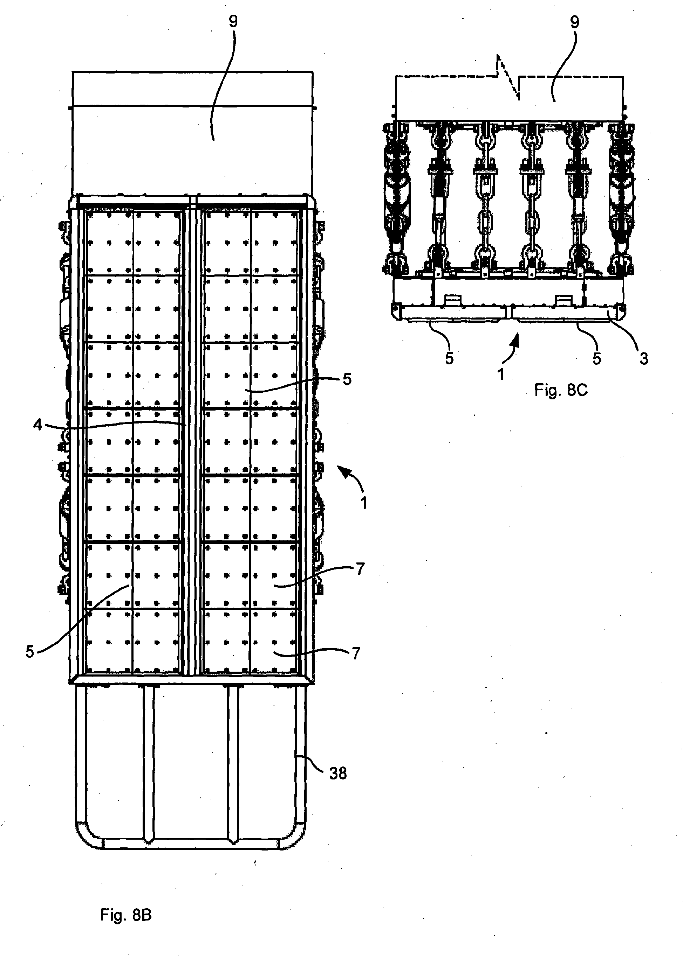

Figures 1A, 1B, 8A, 8B and 8C illustrates a maritime fender assembly 1 for a berthing structure (not shown), such as a pier, wharf, jetty, dolphin structure, goods terminal, passenger terminal etc.

The fender assembly 1 has a frame 3 which releasably receives removable panel assemblies 5 via engagement means 4.

The frame 3 is mounted via an energy absorbing fender element 11 to a base 9 which in turn is fixed to the berthing structure. Fender element 11 allows the frame 3 to move relative to the base 9 and berthing structure when impacted by berthing vessels. In use, outwardly facing wear pads 7 on the panel assemblies 5 provide a contact surface for a hull of a vessel, and kinetic energy from impact of the hull is transmitted to the frame 3 and absorbed by the fender element 11.

For maintenance, the panel assemblies 5 are disengaged from the frame 3 to allow for their removal for servicing and/or replacement. This can be done while the remaining parts of the fender assembly 1, such as the frame 3, fender element 11 and base 9 are maintained in situ.

The fender assembly 1 is also provided with a plurality of support chains 15, each support chain extending between mounting points such as 19 and 21 respectively located on the frame 3 and base 9.. The support chains 15, in use, are positioned and tensioned to maintain the frame assembly 3 (and the panel assemblies 5 carried thereby) in a selected position and/or orientation. To assist in maintenance of the fender assembly 1, there is also disclosed a detensioning system 150 for detensioning the support chains 15 to allow for their removal for replacement or other maintenance. The detensioning system 150 includes one or more detensioning chains 23 that are mountable adjacent to the support chain mounting points 19, 21 via first and second detensioner mounting points 25 and 27 provided respectively on the frame 3 and base 9. When the support chains 15 need to be removed, detensioning chains are secured in place between the detensioner mounting points and then shortened to relieve tension in the support chain 15.

To further assist in the maintenance procedure additional components and assemblies may also be used. For example, in Figure 1 a removable access platform 13 is shown. Platform 13 is removably located at the fender assembly and secured to the berthing facility to provide a working area for workers to access relevant components of the fender assembly 1.

It will be appreciated that embodiments of the present invention extend to individual components/assemblies that are described herein, as well as to various combinations of those components/assemblies. Further, while in the illustrated embodiments of the invention the fender assembly 1 is shown with two panel assemblies, the invention could equally be practiced with a single panel assembly or more than two panel assemblies.

### Fender assembly

The components of the fender assembly 1 will now be described in detail.

### Frame

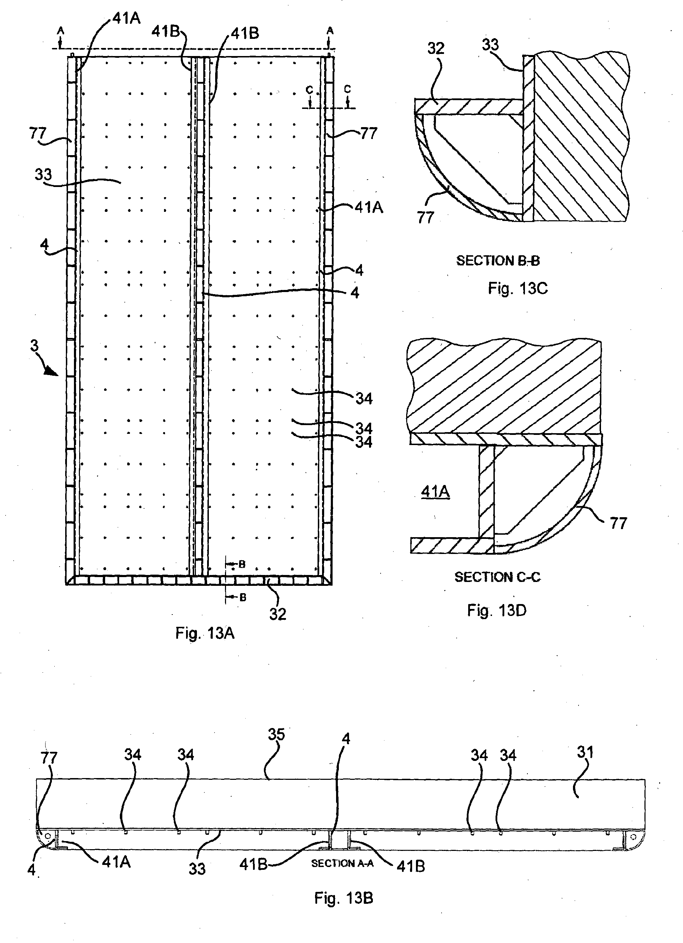

The frame will now be described with reference to Figures 13A-14D.

The frame 3 has a substantially hollow rectangular prism frame body 31 constructed from stainless steel or other material suitable for use in a marine environment. The frame body 31 has two main planar surfaces on opposite faces: an outwardly facing surface 33 facing away from the berthing structure, and an inwardly facing surface 35 facing towards the berthing structure.

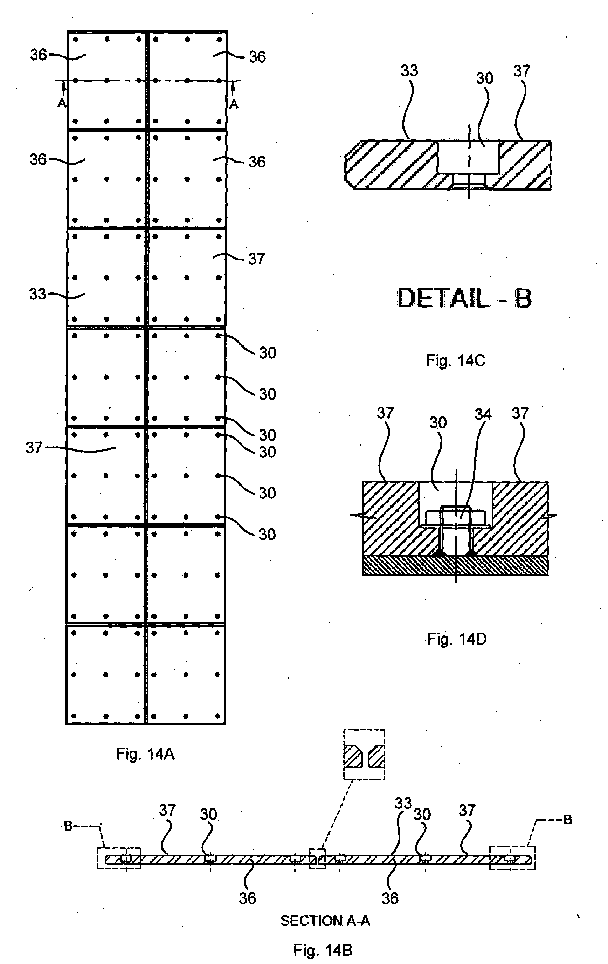

The outwardly facing surface 33 is provided with a low friction surface 37 , which provide a low friction surface for panel assemblies 5 to slide against during removal and replacement, as well as an abutment surface for transmission of an impact force from the panels 5 to the frame 3. In this instance the low friction surface 37 is provided by a plurality of inner wear pads 36 arranged into two arrays separated by the central channels 41B as discussed below with reference to Figures 14A-14D. Each inner wear pad 36 is made of UHMWPE or HDPE and has a plurality of apertures 30 for affixing the inner wear pad 36 to the frame 3 by fasteners 34, as shown in Figure 14D. As illustrated, M16 SS316 studs are welded to the frame 3. Subsequently M16 SS316 half-nuts and oversized washers are used to the inner pads to the studs/frame 3. Advantageously, though not essentially, the low friction surface 37 (e.g. the individual inner wear pads 36) may be coloured to contrast with other components of the fender assembly 1, and in particular with the colour of the outwardly facing wear pads 9. This assists in easy visual identification of a fender assembly 1 which is undergoing maintenance and has a panel 5 removed.

The inner wear pads 36 may be replaced periodically due to the frictional wear or change from contact with the panel assemblies 5. However this will generally be less frequent then replacement of the outwardly facing wear pads 7.

At the centre of the inwardly facing surface 35 is a frame assembly mount 39, where the frame 3 is mounted to the fender element 11. The frame assembly mount 39 provides the interface for transmission of force and energy from the frame 3 to the fender element 11.

As can most easily be seen in Figure 8A, the inwardly facing surface 35 of the frame 3 is also provided with a plurality of support chain mounting points 19, each with respective adjacent detensioner mounting points 25.

At the top portion of the frame 3, there is a plurality of vertically extending spigots 138, best shown in Figure 1B and 8A. These spigots 138 are received in apertures 136 of the removable access platform 13, which will be described in more detail below.

A rope guard 38 extends from the lower portions of the frame body 31 to prevent entanglement of mooring lines with the fender assembly 1.

### Engagement means

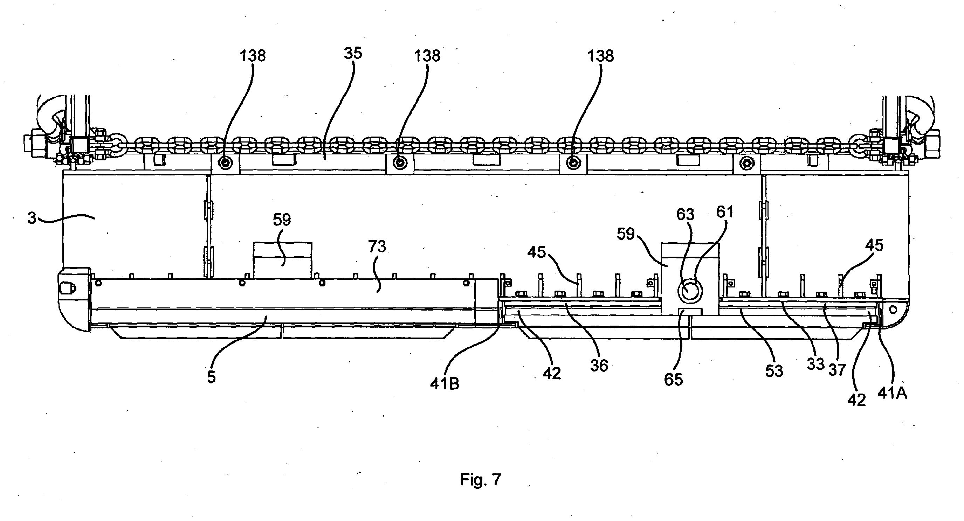

In order to removably receive the panel assemblies 5 (discussed below), the frame 3 is provided with two pairs of opposing channels 41, best seen in Figure 7. Each pair of opposing channels 41 includes an edge channel 41A disposed proximate to a vertical side edge of the frame 3, and a relatively central channel 41B running down the frame 3. Each edge channel 41A runs substantially the length of the frame 3 and opens towards its associated central channel 41B. Each central channel 41B also runs the substantial length of the frame 3 and opens towards its associated edge channel 41A. At the base of the frame 3 is an outwardly extending lip 32 for abutting against and supporting the panel assemblies 5 when in place.

In use, the channels 41 and lip 32 form part of the engagement means 4. Each pair of opposing channels 41 is adapted to receive a pair of opposite side edges 42 of a panel assembly 5 which slots into place in the channels 41 and rests on the lip 32.

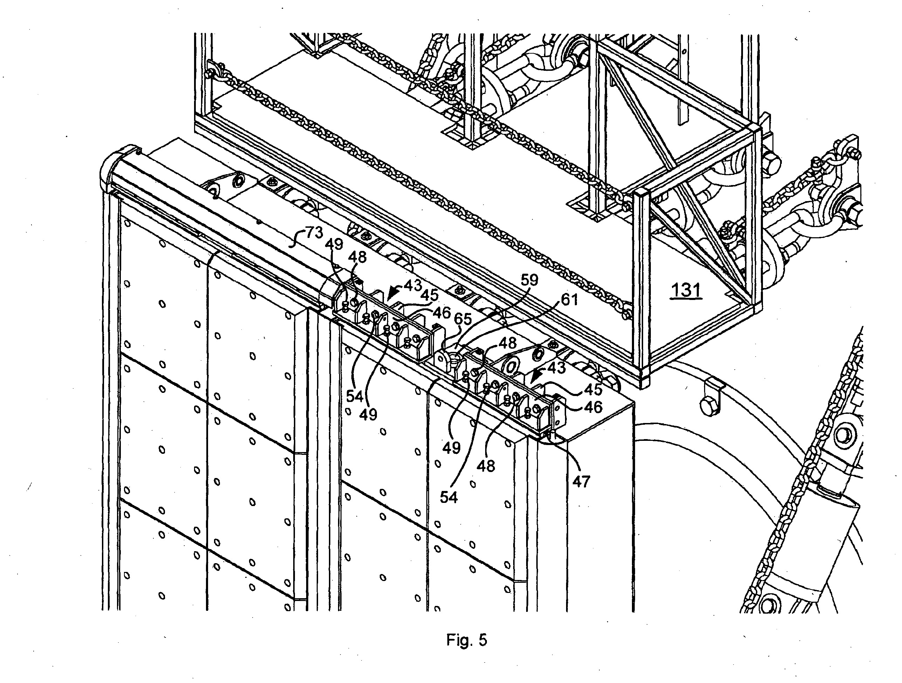

In order to secure the panel assembly 5 in place a bracket assembly 43 is used as best illustrated in Figure 5. The bracket assembly includes a first bracket 45 fixed to the top portion of the frame body 31. The first bracket 45 is provided with a plurality of fastening apertures 52 to enable fasteners (e.g. bolts 48) to pass through. The bracket assembly also includes a second bracket 46 having a plurality of fastening apertures 54 corresponding to the fastening apertures 52 of the first bracket 45. Removable bracket 46 further includes a panel assembly abutment surface 47 for abutment with a top portion 57 of a panel assembly 5. The vertically oriented bolts 49 are received into the removable brackets 46 via threaded apertures. The bolts 49 then tightened sufficiently to push against the top portion 57 of the panel assembly 5. This force prevents the panel assemblies 5 from popping out of the channels 41 of the frame 3. When the bracket assembly 43 is assembled by fastening the brackets together, the panel abutment surface 47 prevents the panel assembly 5 from slidingly moving out of engagement with the frame 3.

The bracket assembly 43 in this embodiment, forms a further part of the engagement means 4.

In use the bracket assembly 43 secures a panel assembly 5 in place by fastening the removable bracket 46 to the fixed bracket 45, whereby the panel assembly abutment surface 47 prevents the panel assembly 5 from moving out of place.

### Panel assemblies

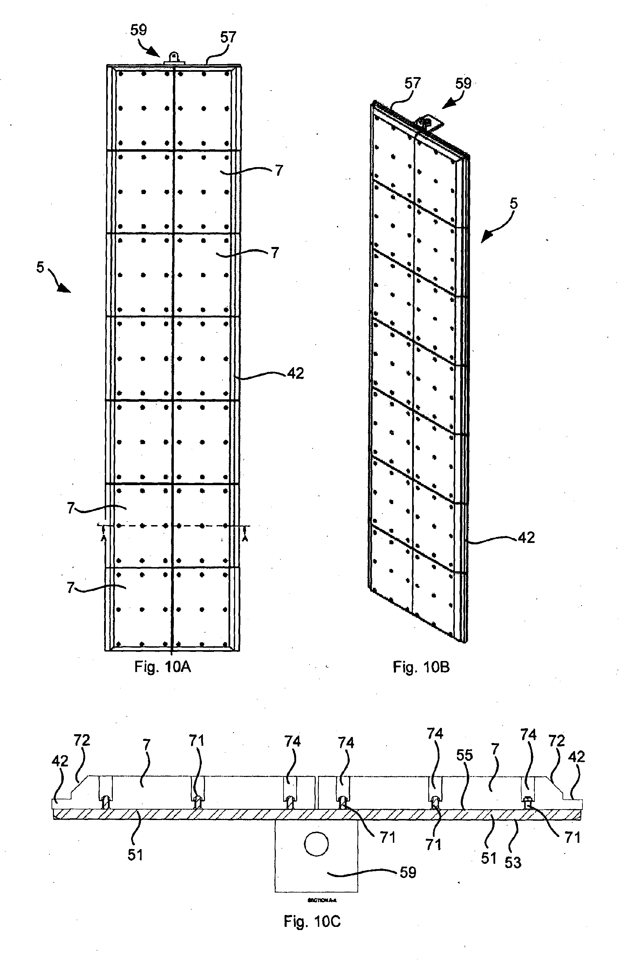

The panel assembly 5 will now be described with reference to Figures 10A-12E.

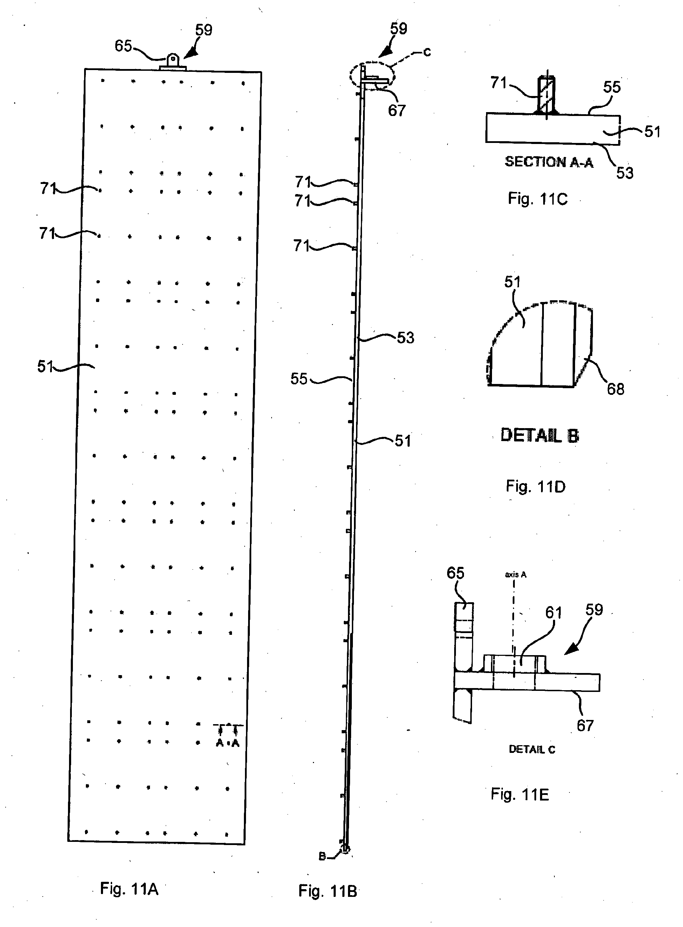

Each panel assembly 5 has a substantially flat panel plate 51 constructed of stainless steel as illustrated in Figures 11A-11E. The panel plate 51 has an inner surface 53, which when the panel assembly 5 is received by the frame 3 abuts the inner wear pads 37. The panel plate 51 has an outer surface 55 to which the fender face is affixed. In this embodiment the fender face includes an array of outwardly facing wear pads 7 which are releasably mounted to the plate 51 fasteners 71 (such as bolts and nuts) as shown in Figures 10C and 11C. At the opposite peripheral sides of the panels 5 are vertical side edges 42, which are slidingly receivable into the channels 41 along a vertical sliding axis along the channel to engage the panel 5 with the frame 3. The outwardly facing wear pads 7 includes an angled section 72 leading to the vertical side edges 42. This angled section 72 assists in guiding the vertical side edges 42 in to the channels 41 when sliding the panel assembly 5 into engagement with the channels. There is also a chamfer 68 on the lower left and right inward facing edges of the panels 5 as shown in Figure 11B detail B and Figure 11D. This further assists sliding the panel assembly into engagement with the channels 41. This chamfer extends approximately 2 metres from the bottom edge of each panel 5.

At the top 57 of the panel 5 a jacking bracket 59 is provided as best shown in Figures 11A, 11B and 11C. The jacking bracket 59 extends rearwardly from the panel so as, in use, to extend over a section of the frame 3. The jacking bracket 59 has an internally threaded aperture 61 having an aperture axis A which is parallel to the vertical sliding plane of the panel assembly 5 (i.e. the plane along which the panel is slid into receiving channels 41). The lower opening of the threaded aperture 61 faces a jack engagement surface 63 on the top portion of the frame body 31. The threaded aperture 61 allows a threaded rod/jack (not shown) to be received therein, whereby movement of the rod through the aperture 61 causes an end surface of the rod to impart a force against the jack engagement surface 63. The resulting force separates the jacking bracket 59 and the panel 5 away from the jack engagement surface 63 of the frame body 31 in a direction along the vertical sliding plane. This can be of assistance where the panel assembly 5 has become stuck in place in the frame 3 due to marine growth for instance.

A lifting lug 65 is provided at the top portion 57 of the panel 5, and in the illustrated embodiment, extends from the jacking bracket 59. The lifting lug 65 allows the panel assembly 5 to be attached to a hoist to lift the panel assembly 5 for extraction from and insertion into the fender assembly 1.

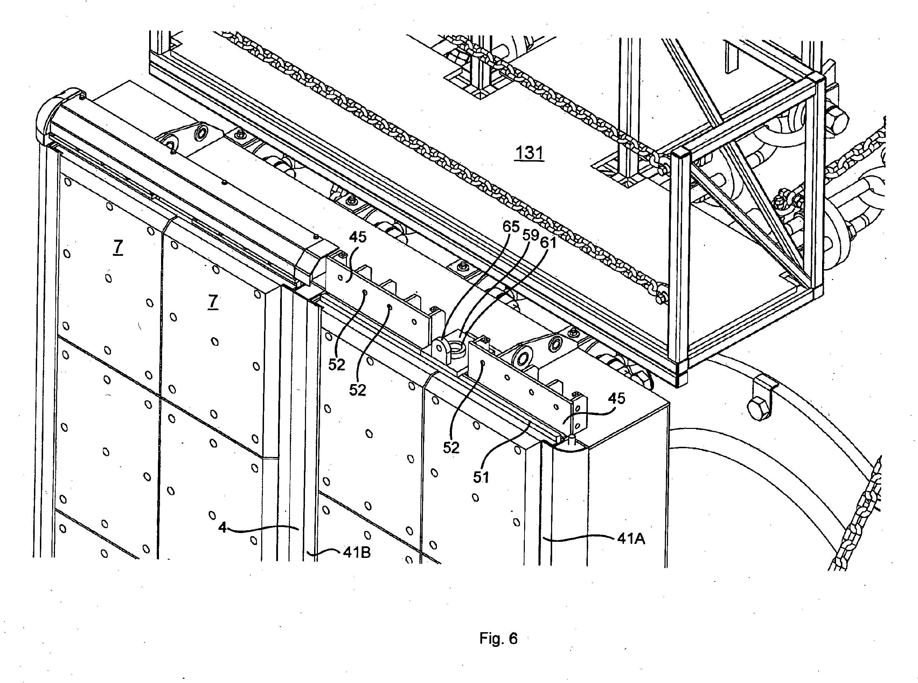

A stop 67 is provided to on the panel 5 to prevent downward vertical movement of the panel 5 beyond a desired position relative to the frame 3. The stop 67 may be a bottom surface of the jacking bracket 59, which, when the panel 5 is at the lowermost desired position is in abutment with the top portion of the frame body 31, as best illustrated in Figures 6 and 11E. The stop 67 is functionally similar to the lip 32 described above, and may also form part of the engagement means 4.

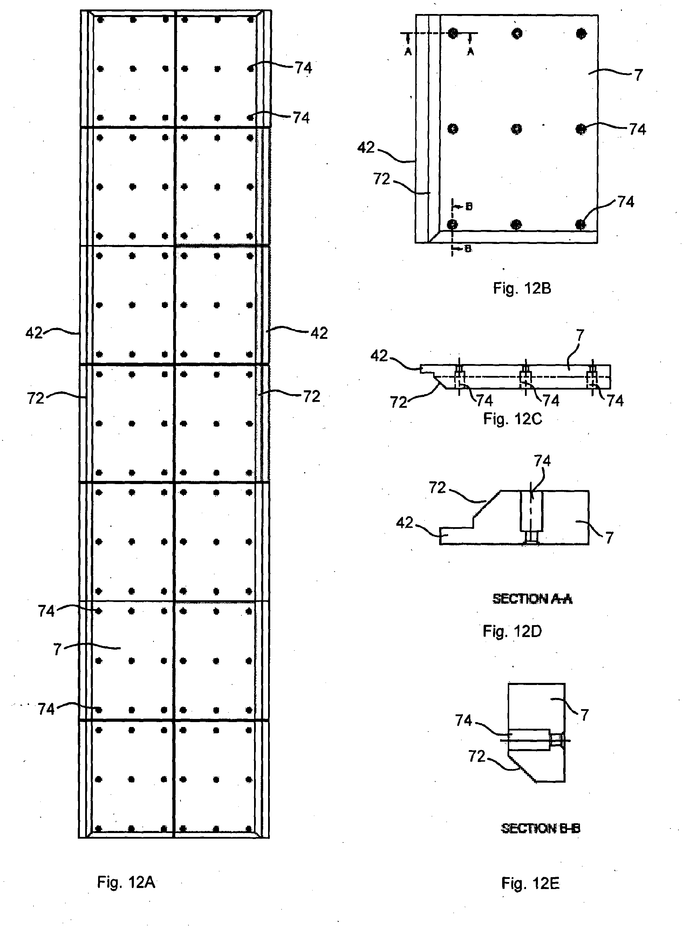

The outwardly facing wear pads 7 function as a sacrificial part of the fender assembly 1 as best shown in Figures 12A-12E. The outwardly facing wear pads 7 are made of a low friction material designed to avoid (as far as possible) damage to objects that are expected to bear against them, such as the hull of vessels. The outwardly facing wear pads 7 may be made of a plastic material such as Ultra-high-molecular-weight polyethylene (UHMW-PE) or HDPE. The wear pads 7 have a plurality of apertures 74 to receive fasteners 71 for securing the wear pads 7 to the panel plate 51.

### Fender element

The fender element 11 of the present embodiment is a substantially hollow cylindrical form made of a resilient elastomeric material, such as rubber, such as SCN super cone fender or SCK super cell fender. These are the most commonly used fender types for large fender systems supplied by Trelleborg AB and come in a variety of sizes from 300mmH to 3000mmH. The fender element 11 is designed to absorb and cushion force, momentum and energy transmitted via the moveable frame 3 and panel assemblies 5. Typically this will be from an impact of the hull of a vessel to the panels 5. During impact, the fender element 11 deforms to allow movement of the frame 3 and panel assemblies 5. After impact, the resilience of the material allows the fender element 11 to rebound back to the pre-impact shape state.

In the illustrated embodiment, one end of the fender element 11 is attached to the mounting location 39 of the frame 3, and the opposite end attached to the base 9. At least part of the weight of the frame 3 and panels 5 in this embodiment is supported by the fender element 11 (the remainder of the weight being supported by support chains 15 as discussed below).

The fender element 11 also provides a bias force to the frame 3, which is countered by a reactive tension force in the support chains 15 discussed below. This bias force includes a component biasing the frame 3 outwardly away from the base 9.

### Base

The base 9 is fixed to the berthing structure, thus forming a "fixed" part of the fender assembly 1 relative to the berthing structure. This is in contrast to the "moveable" frame 3 and panel assemblies 5. The base 9 provides an attachment point for the fender element 11. The base also provides support chain mounting points 21 and detensioner system mounting points 27. The base 9 as the "fixed" part of the fender assembly 1 also provides a stable support for the access platform 13 during maintenance,

### Guards

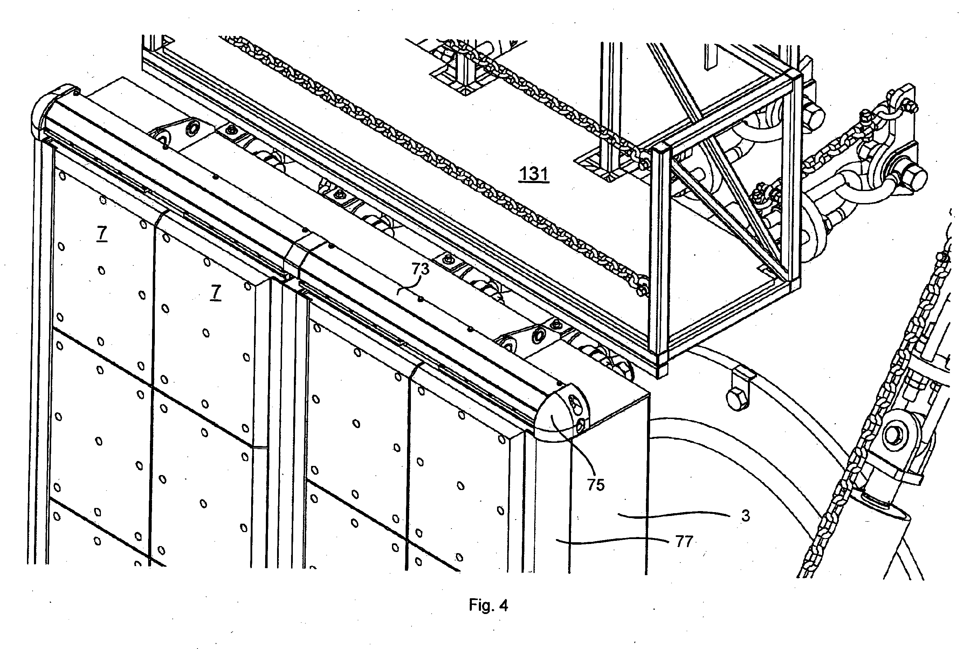

To prevent snagging of mooring lines, and damage from incidental impact, the fender 1 is provided with a series of bumper guards and covers as illustrated in Figure 4. In this instance these include a top cover 73 over the bracket assembly 43, and rubber corner and edge protectors 75 and 77 for providing a bumper guard to protect the frame from vessel contact. These covers 73 and guards 75, 77 may be modular and replaceable.

As described above, a rope guard 38 is also provided below the fender to reduce the likelihood of mooring (or other) ropes/chains being caught behind the fender 1.

### Support chains

A plurality of support chains 15 assist in maintaining the frame 3 and panel assemblies 5 in a desired position and orientation, and are normally under tension. The tension in the support chains 15 may be due to any one of weight of the frame 3 and panel assemblies 5, bias force of the energy absorbing means 11, or external forces acting on the frame 3 and panels 5 such as waves, wind or impact of the hull of a vessel.

Tension chain 151, is a support chain 15 for maintaining the frame 3 in a substantially vertical orientation, in particular preventing the frame 3 and the outwardly facing wear pads 7 from facing downwards towards the water.

Uplift chain 153, is a support chain 15 for maintaining the frame 3 in a substantially vertical orientation, in particular preventing the frame and the outwardly facing wear pads 7 from displacing upwards during a vessel berthing operation.

Weight chain 155, is a support chain 15 for supporting the weight of the frame 3 and panels 5, to prevent the frame 3 and panel assemblies 5 from displacing downwards.

A component of the tension in the above described support chains 15 also assists in preventing the frame 3 and panel assemblies 5 from displacing outwards away from the base 9.

Shear chains (not shown) are another type of support chain 15 that may be used. Shear chains provide a tension force to prevent the frame 3 from rotating from side to side, and are typically arranged in a cross pattern when the fender assembly is viewed from the top.

The support chains 15 may also include a length adjustable element 157. The length adjustable element 157 allows adjustment of the desired length of the support chains 15 to achieved the desired position/orientation of the frame 3 and panel assemblies 5.

### Detensioning system

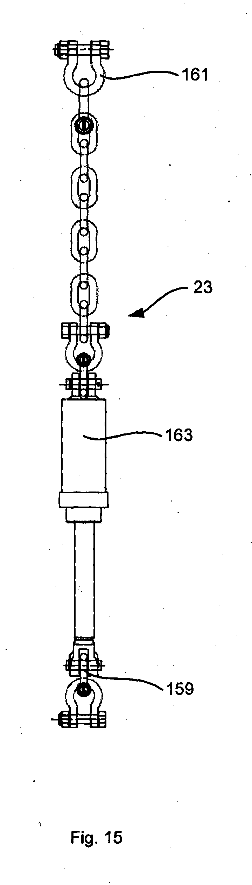

In order to facilitate simple and efficient maintenance of the support chains, one or more detensioning chains 23 are provided as best illustrated in Figures 8A, 8C and 15. Typically a plurality of detensioning chains are provided, one to match each support chain that needs to be detensioned.

Each detensioning chain has a first end 159 receivable to a frame-side detentioner mounting point 25, and a second end 161 receivable to the base-side detentioner mounting point 27. A length adjustable component 163 is disposed between the detensioner ends 159 and 161, and when activated, draws the ends 159 of the detensioner 161 together.

The length adjustable component 163 in one embodiment includes a hydraulic cylinder to provide force to pull the ends 159, 161 together. When deactivated, the hydraulic cylinder may slowly decrease the hydraulic force to allow the ends 159, 161, and attached components of the fender assembly 1 to be separated from each other in a controlled manner.

As described above, the frame-side and base-side detensioner mounting points 25 and 27 of the present embodiment are mounted adjacent to the relevant support chain mounting points. It will be appreciated, however, that alternative mounting points could be used provided their position allows the detensioner to detension the relevant support chain on operation.

### Maintenance system

### Hoist

The maintenance system 100 for the fender assembly 1 includes a hoist (not shown). The hoist may be in the form of a crane or other machinery capable of lifting loads vertically. This may include a mobile crane driven or otherwise transported to the either the berthing assembly or water adjacent the fender assembly 1.

### Access platform

To facilitate maintenance, and in particular worker access to the top of the fender frame 3, a removable access platform 13 may be provided.

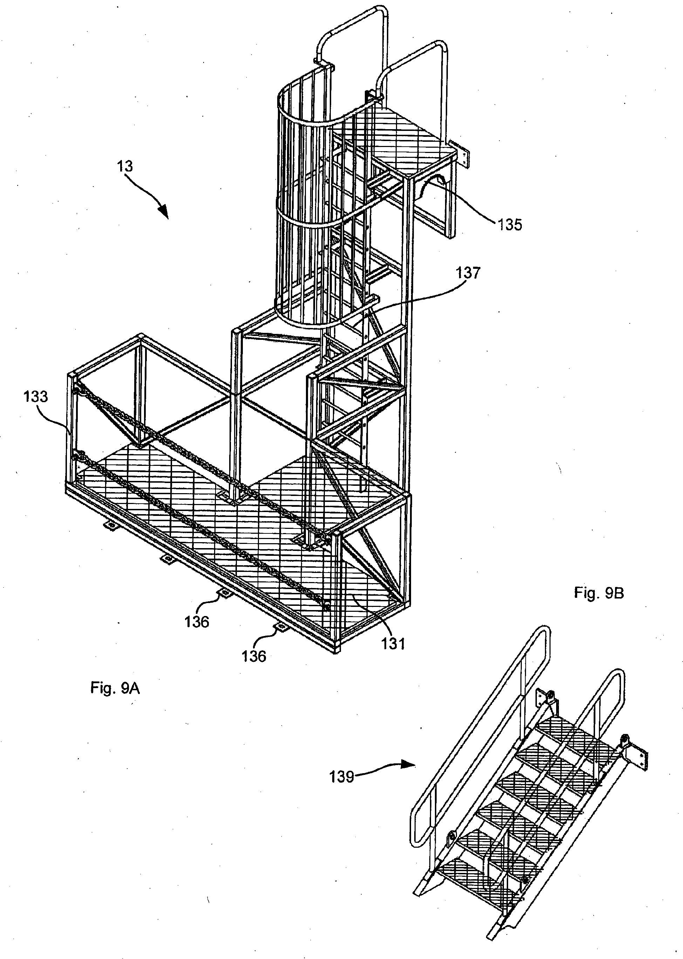

Referring to Figures 9A and 9B, the removable access platform 13 includes mounting zone 135 for locating the access platform 13 with the base 9 of the fender assembly 1. A working area 131 is provided at a level below the mounting zone 135, whereby the working area is accessible by a ladder 137. The working area 131 is located to provide access for workers to components of the fender assembly 1, including the lifting lug 65, jacking bracket 59 and bracket assembly 43. A safety barrier 133 surrounds the working area 131 and ladder 137. As shown in Figure 9A, the removable access platform 13 is provided with a plurality of flanges each having respective apertures 136. The apertures 136 receive the corresponding spigot 138 extending upwardly from the frame 3. This ensures that the access platform 13, and the working area 131 is located correctly in the desired position relative to components of the fender assembly 1. This arrangement may also ensure stability of the access platform 13 and/or the frame 3 during maintenance operations.

A gangway 139 may be provided as a bridge between the access platform 13 and the pier.

By locating the mounting zone 135 of the access platform 13 with the base 9, movement of the moveable frame 3 or panel 5 will not affect the stability of the access platform 13. Advantageously, this provides a stable work area in contrast with attempting to access components of the fender assembly 1 from a vessel on the water.

### Method/operation

In a port facility, berthing structures such as a pier have a plurality of fender assemblies 1 located at areas where vessels are expected to be berthed. After prolonged use of the pier, the wear pads 7 of the fender assemblies will wear and eventually require replacement. To ensure the fender assemblies are maintained in a serviceable condition, the wear pads 7 need to be inspected, and replaced if required.

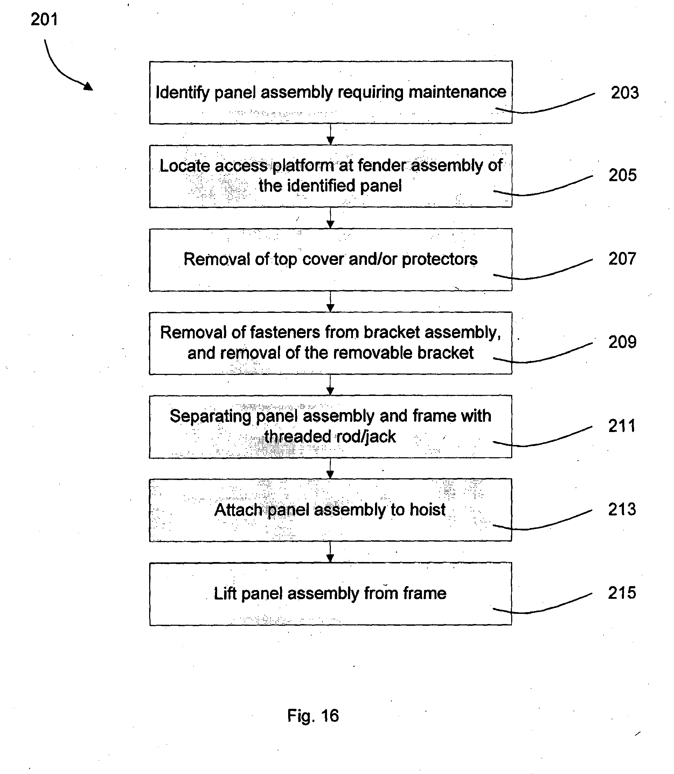

Maintenance of the fender assemblies 1 will now be described with reference to Figures 16 - 19 which show respectively: a flowchart 201 depicting the steps involved in removing a panel assembly 5; a flow chart 301 depicting the steps involved in maintaining a panel assembly 5; a flow chart 401 depicting the steps involved in replacing a panel assembly; and a flowchart 501 depicting the steps involved in maintaining one or more support chains 23.

Although the various steps/stages in Figures 16-19 are depicted sequentially, it will be understood that not all steps/stages will be necessary in all situations, and ordering the steps/stages as depicted is not (in all instances) essential.

### Removal of panel assemblies

The removal of the panel, assemblies will now be described with reference to Figure 16. At step 203 a fender assembly having a panel assembly 5 that requires maintenance is identified. Identification of the panel assembly 5 may be in accordance with a maintenance schedule and cycle, whereby panel assemblies 5 (or, more particularly, the outwardly facing wear pads 7 carried thereby) are periodically removed and inspected. Alternatively, the inspection of the plurality of the fender assemblies 1 and panels 5 *in situ* may result in identification of panels 5 that warrant removal and further inspection and/or servicing.

At step 205, and if being used, the access platform 13 is located at the fender assembly 1 of the identified panel assembly 5, as shown in Figure 1A, by lowering the access platform 13 onto the base 9 with a hoist. This allows workers at the working area 131 to access components at the top portion of the frame 3 and panels 5.

Workers at the working area 131 may then begin the process of releasing the identified panel assembly 5 from engagement from the frame 3. This includes removal of the top cover 73 and corner protectors 75 from bracket assembly 43 at step 207 (as shown in Figures 4 and 5). At step 209 the fasteners 48 can then be removed, to allow removal of the removable bracket 46 from the bracket assembly 43 as shown in Figure 6. At step 211 (if required), a threaded rod/jack (not shown) may then be rotated into threaded aperture 61, whereby the end surface of the rod imparts a force against the jack engagement surface 63. This resultant force separates the jacking bracket 59 and the attached panel assembly 5 away from the frame body 31 by a small distance, for example 50mm. This advantageously assists to dislodge any marine growth than may impair easy separation between the panel assembly 5 and the frame 3. The jacking screw may be part of a hydraulic jack lowered by the hoist.

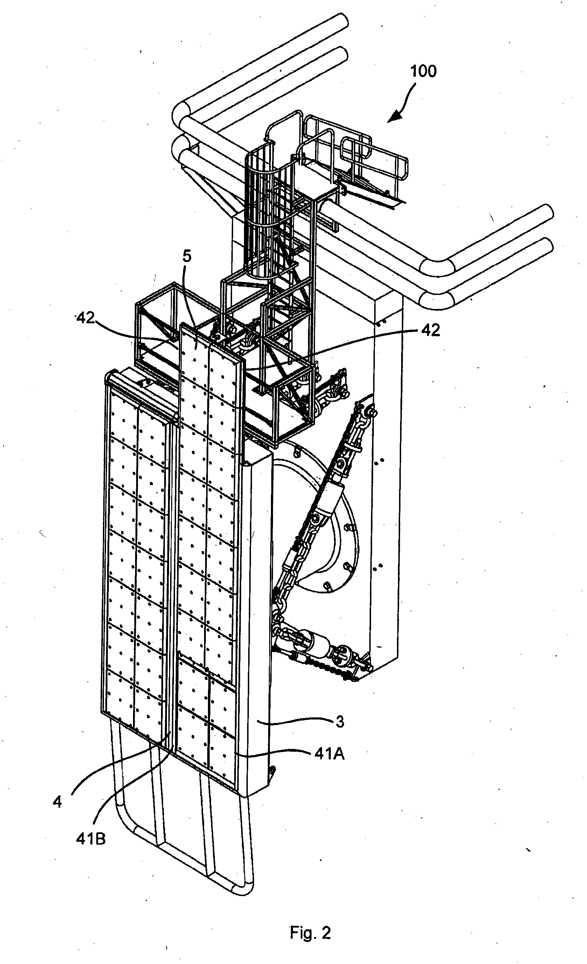

At step 213 the panel assembly 5 is then attached to the hoist via the lifting lug 65, and at step 215 the panel assembly 5 is lifted vertically from the frame 3. As the opposite side edges 42 of the panel assembly 5 are received in the opposing channels 41, panel assembly 5 has a guided path along a vertical sliding plane as it is slidingly disengaged from the frame 3, as best illustrated in Figure 2.

### Maintenance of panel assembly

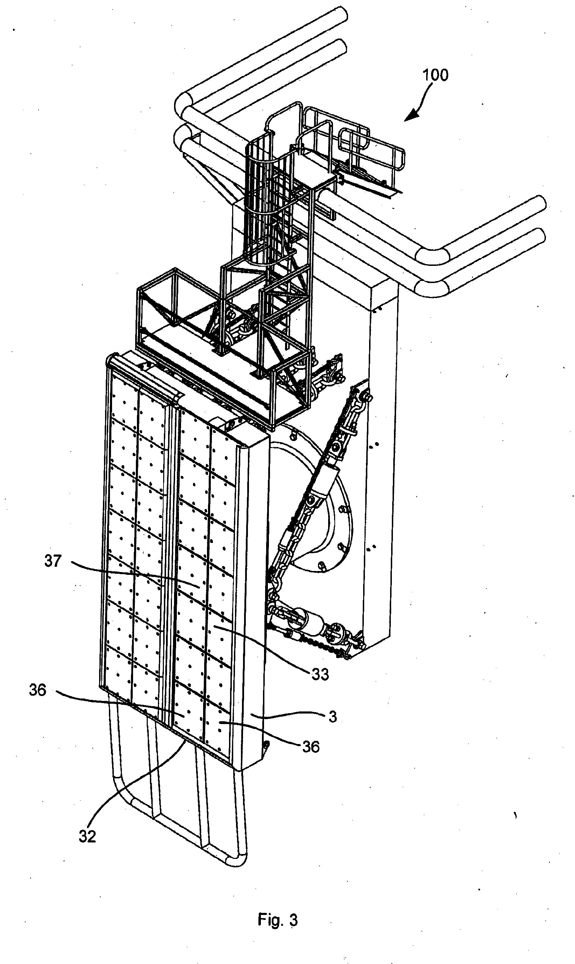

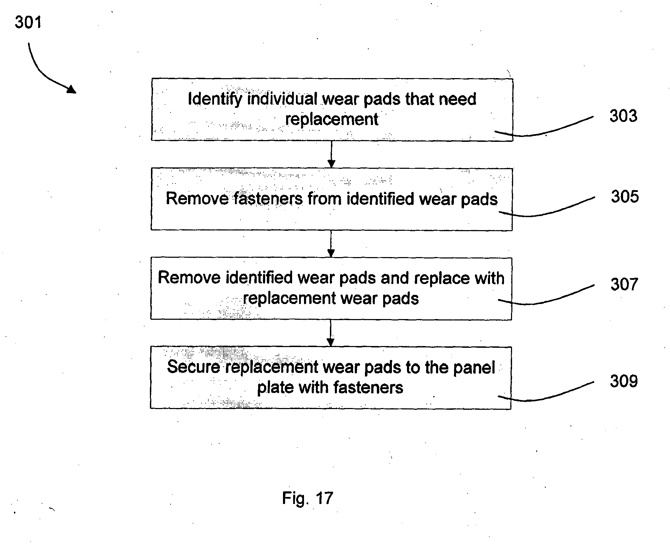

Turing to Figure 17, once the panel assembly 5 is lifted clear of the remaining fender assembly 1, as shown in Figure 3, it is moved away for inspection, servicing or destruction.

At step 303 the panel assemblies 5 are inspected to identify individual wear pads 7 that need replacement. At step 305, the fasteners 71 of the identified wear pads 7 are removed from the panel plate 51. The identified wear pads 7 are then removed, and replaced with replacement wear pads 7 as shown at step 307. Subsequently, at step 309 the replacement wear pads 7 are then secured to the panel plate 51 with fasteners.

In some instances inspection and servicing may be performed in the vicinity of the respective fender assembly 1. However, to minimise down-time of the berth and berthing structure, it may be advantageous to quickly replace the removed identified panel with a spare serviceable panel assembly 5 so that the berth may be used as soon as possible. In this instance the maintenance steps need not be carried out as part of the panel assembly replacement operation, but can conducted in a workshop at another time and location where it will not disrupt operation of the berths.

### Replacement of panel assembly

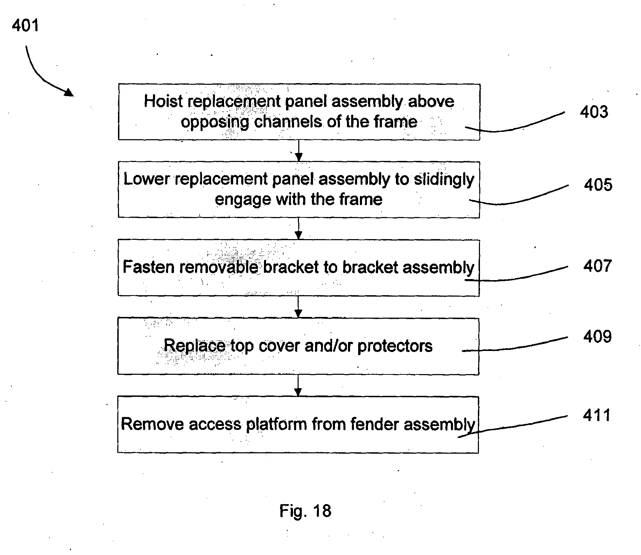

The steps for replacing a panel assembly 401 will now be described with reference to Figure 18.

To replace the panel assembly 5, at step 403 the replacement panel assembly 5 is hoisted by the lifting lug 65 so that it is positioned vertically above the opposing channels 41 of the frame 3.

At step 405 the panel assembly 5, typically with the assistance of workers, is guided and lowered so the opposite edges 42 are received into the channels 41. Further lowering of the panel assembly 5 by the hoist allows the panel assembly 5 to slidingly engage into the desired position with respect to the frame 3. The stop 67 ensures the panel assembly 5 cannot be lowered past the desired position.

At step 407 the panel assembly 5 is further engaged with the frame by fastening the removable bracket 46 to the bracket assembly 43 to prevent movement of the panel assembly 5 relative to the frame.

At step 409 the top cover 73 and/or corner protectors are then replaced.

At step 411 the access platform 13 (if in use) is removed from the fender assembly 1, and the fender assembly 1 and berth may resume normal operation.

In one advantageous implementation, the removal and replacement of the panel assembly 5 may be performed during the downtime period of the berth between vessels leaving and entering the berth during a normal operation cycle. This minimises the disruption fender maintenance may have on vessel loading/unloading operations. Therefore to perform maintenance on a plurality of fender assemblies 1 on a pier, it may be advantageous to schedule maintenance on a small number of fender assemblies 1 during each downtime period, so that maintenance on the entire plurality of fender assemblies 1 would be spread over several cycles of vessels leaving and entering the berth.

### Removal and replacement of support chains

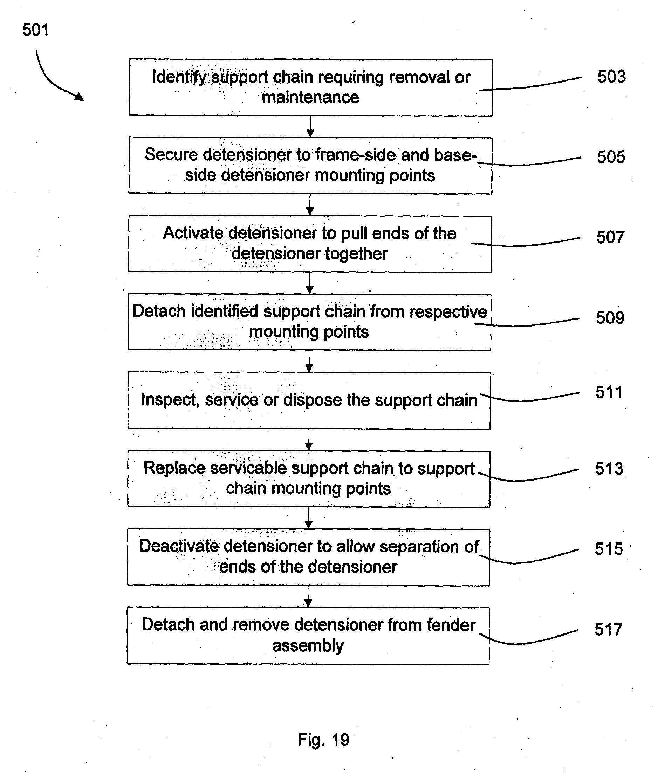

Turning to flowchart 501 Figure 19 (and with reference to Figure 8A), removal and replacement of the support chains 15 with the assistance of the detensioners 23 will now be described.

At step 503 a support chain 15 requiring maintenance or replacement is identified.

At step 505, the ends 159, 161 of the detensioner 23 are secured in the frame-side and base-side detensioner mounting points 25, 27.

At step 507 the detensioner 23 is then activated so that the length adjustable component 163 pulls the ends 159, 161 of the detensioner 23 together. As a result, the frame 3 is pulled by the detensioner towards the base 9, with the detensioner 23 itself in tension.

At step 509 the identified support chain 15 (now relieved of tension), is detached from respective support chain mounting points 19 and 21.

At step 511 the support chain 15 may be inspected, serviced or disposed.

To replace the support chain 15, a serviceable support chain is attached to the support chain mounting points 19, 21 at step 513.

At step 515 the installed detensioner is deactivated to allow separation of the ends 159, 161 of the detensioner 23. This reduces the tension in the detensioner 23 and allows the serviceable support chain 15 to take up tension. Ideally, though not essentially, the detensioner is deactivated by gradually reducing the force/pressure in the hydraulic cylinder of the length adjustable component 163 so that the decrease in tension in the detensioner 23 and consequential increase in tension of the support chain 15 occurs in a gradual controlled manner.

Once the serviceable support chain 15 is properly tensioned, the detensioner 23 is detached and removed from the fender assembly 1 at step 517.

### Advantages

An advantage of the disclosed embodiments is to allow servicing of the wear pads 7 without disassembly and removal of other components of the fender assembly such as the frame, or energy absorbing unit. By leaving the frame and other components in situ, less labour and machinery (and hence less time) is required to service the maritime fender assembly.

For example, maritime fender assemblies can be large devices with the frames weighing in the order of tonnes. By removing only the panels and associated pads, a smaller hoist having a smaller lifting capacity can be used. This can lead to faster set-up times for the hoist and other maintenance equipment such as the access platform. As the panels are relatively lighter and smaller, there is a reduced handling requirement. Such applications are also relevant for older berths that have limited weight restrictions on their offshore access jetties, thus making it impossible to transport a regular fender frame to shore for maintenance without the use of costly barges and floating crane vessels.

Another advantage may be obtained by scheduling fender maintenance between the period vessels leave and enter the dock. This would allow maintenance of the fender assemblies to be conducted without affecting or significantly affecting normal vessel operations at the berth.

The detensioners advantageously assist removal of the support chains by relieving tension in the support chains before removal. This allows easier removal of the support chains, and may improve the safety for workers who can avoid or minimise handling of the support chains that are under tension. The detensioners may also be advantageously used to assist in restoring tension in the support chains during installation.

### Variations

The engagement means 4 may comprise of a range of means to engage the panel assembly 5 to the frame 3. In one variation, the panel assemblies 5 may slide into engagement with the frame 3 along an axis perpendicular to the outwardly facing surface 33 of the frame 3. In another variation, the panels 5 may slide into engagement with the frame 3 along a horizontal axis parallel to the outwardly facing surface 33.

The above described fender assembly 1 includes two panel assemblies 5 received by a single frame 3. Variations may include other combinations, including one panel assembly for each frame, or a plurality of panel assemblies 5 for each frame 3. In yet another variation, there may be provided one panel assembly engaged with two or more frames 3.

In one variation, the panel assemblies 5 may be a substantially monolithic component, such as a single piece of rubber with at least one outwardly facing surface as a wear pad.

In the embodiment described above, the fender element 11 is an elastomeric body which relies on deformation of the resilient material. However, it is to be appreciated the energy absorbing unit may be of other forms, such as a pressurised body (e.g. an "airbag"), a system of springs, pneumatic or hydraulic systems etc. Importantly, the fender element absorbs energy transmitted from the moveable frame 3, whilst allowing at least some displacement of the frame 3 relative to the base 9 and berthing structure.

Furthermore, the fender element 11 described above also functions to support at least part of the weight of the frame 3 and panels 5. Variations of the fender assembly may include other weight supporting elements so the frame 3 for the frame can be moveably mounted to the berthing structure. In such variations, the energy absorbing unit is not required to support the weight of the frame 3 or panels 5.

The detensioner 23 described above includes a hydraulic cylinder to pull the ends 159, 161 together. In variations of the detensioner, other forms of the length adjustable component 163 may be used, including a threaded jack, a ratchet system, pneumatic system etc.

It will be understood that the invention disclosed and defined in this specification extends to all alternative combinations of two or more of the individual features mentioned or evident from the text or drawings. All of these different combinations constitute various alternative aspects of the invention.

## Claims

1. A method of maintaining a maritime fender assembly (1) mounted to a berthing structure, the maritime fender assembly comprising:
a frame (3) for releasably receiving a panel assembly (5), the panel assembly (5) being substantially flat and having at least one outwardly facing wear pad (36) for contact with a vessel, the frame (3) comprising:
a pair of opposing channels (41) into which the panel assembly (5) is slidingly received, the pair of opposing channels (41) being, in use, substantially vertical; and
an engagement part (43) having a release configuration whereby the panel assembly (5) is removable from the pair of opposing channels (41) and an engaged configuration whereby the panel assembly (5) is secured in the pair of opposing channels (41); and
a resilient fender element (11) mounted between the frame (3) and the berthing structure, the resilient fender element (11) for absorbing forces on the panel assembly (5) and/or the frame (3);
wherein the method comprises:
configuring the engagement part (43) to the release configuration;
removing an existing panel assembly (5) from the pair of opposing channels (41) by sliding the existing panel assembly (5) out of the pair of opposing channels (41);
positioning a serviceable panel assembly into the pair of opposing channels (41); and
configuring the engagement part (43) to the engaged configuration to secure the serviceable panel assembly to the frame (3),
wherein the method is performed while the frame (3) and fender element (11) are maintained in situ mounted to the berthing structure.

2. A method according to claim 1, further comprising:
replacing one or more worn outwardly facing wear pads (36) on the existing panel assembly (5) with one or more serviceable outwardly facing wear pads to provide the serviceable panel assembly.

3. A method according to claim 1 or claim 2, wherein the panel assembly (5) is slidingly received into the pair of opposing channels (41) along a substantially vertical axis, and wherein:
removing the existing panel assembly (5) from the pair of opposing channels comprises lifting the panel assembly (5) in a substantially vertical direction, and
the step of positioning the serviceable panel assembly into the pair of opposing channels (41) comprises lowering the serviceable panel assembly into the pair of opposing channels (41) in a substantially vertical direction.

4. A method according to any one of claims 1 to 3, wherein the engagement part comprises a bracket assembly (43) comprising a first bracket (45) fixed to the frame (3) and a second bracket (46) removably securable to the first bracket (45), and wherein:
configuring the engagement part to the release configuration comprises releasing the second bracket (46) from the first bracket (45); and
configuring the engagement part to the engaged configuration comprises securing the second bracket (46) to the first bracket (45).

5. A method according to any one of claims 1 to 4, wherein the fender assembly (1) further comprises a release mechanism (59) for facilitating separation of the panel assembly (5) from the frame (3), and wherein the method further comprises operating the release mechanism (59) to separate the panel assembly (5) from the frame (3).

6. A method according to any one of claims 1 to 5, wherein the fender assembly (1) further comprises:
a base (9) mounted to the berthing structure, the fender element (11) being mounted between the frame (3) and the base (9);
one or more support chains (15), each support chain (15) connected to and extending between a frame-side support chain mount (19) provided on the frame (3) and a base-side support chain mount (21) provided on the base (9);
one or more frame-side detensioner mounts (25), each frame-side detensioner mount (25) corresponding to a frame-side support chain mount (19); and
one or more base-side detensioner mounts (27), each base-side detensioner mount corresponding to a base-side support chain mount (21); and wherein the method further comprises:
activating a detensioner (163) affixed between a frame side detensioner mount (25) and a base side detensioner mount (27) to draw the frame (3) and base (9) together, thereby detensioning a support chain (15),
removing the detensioned support chain (15) from its respective frame-side and base-side support chain mounts;
affixing a serviceable support chain to the respective frame-side and base-side support chain mounts; and
deactivating the detensioner (163).

7. A maritime fender assembly (1) for mounting to a berthing structure, the fender assembly comprising:
a substantially flat panel assembly (5) having at least one outwardly facing wear pad (7) for contact with a vessel;
a frame (3) for releasably receiving the panel assembly (5), the frame (3) comprising:
a pair of opposing channels (41) into which the panel assembly (5) is slidingly received, the pair of opposing channels (41) being, in use, substantially vertical; and
an engagement part (43) having a release configuration whereby the panel assembly (5) is removable from the pair of opposing channels (41) and an engaged configuration whereby the panel assembly (5) is secured in the pair of opposing channels (41),
the fender assembly further comprising a resilient fender element (11) mounted between the frame (3) and the berthing structure, the resilient fender element (11) being for absorbing forces on the panel assembly (5) and/or the frame (3).

8. A maritime fender assembly according to claim 7, wherein when the engagement part (43) is in the release configuration the panel assembly (5) is removable from the frame (3) without requiring removal of the frame (3) or the resilient fender element (11) from the berthing structure.

9. A maritime fender assembly according to claim 7 or 8, further comprising a release mechanism (59) for facilitating separation of the panel assembly (5) from the frame (3).

10. A maritime fender assembly according to claim 9, wherein the release mechanism (59) comprises an apertured plate carried by the panel assembly (5) and which, when the panel assembly (5) is received in the frame (3), extends over the frame (3) such that an opening of the aperture (61) faces an engagement surface (63) of the frame (3).

11. A maritime fender assembly according to any one of claims 7 to 10, wherein the panel assembly (3) comprises a plurality of outwardly facing wear pads (7), and wherein the plurality of outwardly facing wear pads (7) are releasably mounted to the panel assembly (3).

12. A maritime fender assembly according to any one of claims 7 to 11, wherein the frame assembly receives two or more panel assemblies (5), each panel assembly (5) received in a pair of opposing channels (41).

13. A maritime fender assembly according to any one of claims 7 to 12, wherein the frame (3) further comprises one or more inner wear pads (37) which face and bear against an inwardly facing surface (53) of the panel assembly (5).

14. A maritime fender assembly according to any one of claims 7 to 13, wherein the engagement part (43) comprises a bracket assembly comprising:
a first bracket (45) fixed to the frame (3); and
a second bracket (46) removably securable to the first bracket (45), and wherein
in the engaged configuration the second bracket (46) is secured to the first bracket (45) to retain the panel assembly (5) in position in the frame (3), and in the release configuration the second bracket (46) is released from the first bracket (45) to allow the panel assembly (5) to be removed from the frame (3).

15. A maritime fender assembly according to any one of claims 7 to 14, wherein the frame (3) comprises a frame-side support chain connector (19) for connecting a support chain (15) to the frame, and a frame-side detensioner connector (25) corresponding to the frame-side support chain connector (19), the frame-side detensioner connector (25) for receiving a support chain detensioner (23) operable to detension the support chain (15) to allow for its removal.

## Patentansprüche

1. Verfahren zum Instandhalten einer an einem Anlegebauwerk angebrachten Schiffsfenderanordnung (1), wobei die Schiffsfenderanordnung Folgendes umfasst:
einen Rahmen (3) zum lösbaren Aufnehmen einer Plattenanordnung (5), wobei die Plattenanordnung (5) im Wesentlichen eben ist und mindestens einen nach außen weisenden Verschleißklotz (36) für den Kontakt mit einem Schiff aufweist, wobei der Rahmen (3) Folgendes umfasst:
ein Paar einander gegenüberliegender U-Profile (41), in denen die Plattenanordnung (5) schiebbar aufgenommen ist, wobei das Paar einander gegenüberliegender U-Profile (41) im Gebrauch im Wesentlichen senkrecht ist; und
ein Eingriffsteil (43) mit einer Lösekonfiguration, in der die Plattenanordnung (5) aus dem Paar einander gegenüberliegender C-Profile (41) entfernbar ist, und einer Eingriffskonfiguration, in der die Plattenanordnung (5) in dem Paar einander gegenüberliegender C-Profile (41) befestigt ist; und
ein elastisches Fenderelement (11), das zwischen dem Rahmen (3) und dem Anlegebauwerk angebracht ist, wobei das elastische Fenderelement (11) zum Dämpfen von Kräften auf die Plattenanordnung (5) und/oder den Rahmen (3) dient;
wobei das Verfahren Folgendes umfasst:
Konfigurieren des Eingriffsteils (43) in die Lösekonfiguration;
Entfernen einer vorhandenen Plattenanordnung (5) aus dem Paar einander gegenüberliegender U-Profile (41) durch Schieben der vorhandenen Plattenanordnung (5) aus dem Paar einander gegenüberliegender U-Profile (41);
Positionieren einer einsatzfähigen Plattenanordnung in dem Paar einander gegenüberliegender U-Profile (41); und
Konfigurieren des Eingriffsteils (43) in die Eingriffskonfiguration, um die einsatzfähige Plattenanordnung an dem Rahmen (3) zu befestigen,
wobei das Verfahren ausgeführt wird, während der Rahmen (3) und das Fenderelement (11) in situ an dem Anlegebauwerk angebracht gelassen werden.

2. Verfahren nach Anspruch 1, weiter umfassend:
Auswechseln eines oder mehrerer verschlissener nach außen weisender Verschleißklötze (36) an der vorhandenen Plattenanordnung (5) durch einen oder mehrere einsatzfähige nach außen weisende Verschleißklötze, um die einsatzfähige Plattenanordnung bereitzustellen.

3. Verfahren nach Anspruch 1 oder Anspruch 2, wobei die Plattenanordnung (5) schiebbar entlang einer im Wesentlichen senkrechten Achse in dem Paar einander gegenüberliegender U-Profile (41) aufgenommen wird, und wobei:
das Entfernen der vorhandenen Plattenanordnung (5) aus dem Paar einander gegenüberliegender U-Profile das Heben der Plattenanordnung (5) in einer im Wesentlichen senkrechten Richtung umfasst, und
der Schritt des Positionierens der einsatzfähigen Plattenanordnung in dem Paar einander gegenüberliegender U-Profile (41) das Absenken der einsatzfähigen Plattenanordnung in das Paar einander gegenüberliegender U-Profile (41) in einer im Wesentlichen senkrechten Richtung umfasst.

4. Verfahren nach einem der Ansprüche 1 bis 3, wobei das Eingriffsteil eine Halteranordnung (43) umfasst, die einen an dem Rahmen (3) fixierten ersten Halter (45) und einen abnehmbar an dem ersten Halter (45) befestigbaren zweiten Halter(46) umfasst, und wobei:
das Konfigurieren des Eingriffsteils in die Lösekonfiguration das Lösen des zweiten Halters (46) von dem ersten Halter (45) umfasst; und
das Konfigurieren des Eingriffsteils in die Eingriffskonfiguration das Befestigen des zweiten Halters (46) an dem ersten Halter (45) umfasst.

5. Verfahren nach einem der Ansprüche 1 bis 4, wobei die Fenderanordnung (1) weiter einen Lösemechanismus (59) umfasst, um die Trennung der Plattenanordnung (5) von dem Rahmen (3) zu ermöglichen, und wobei das Verfahren weiter das Betätigen des Lösemechanismus (59) umfasst, um die Plattenanordnung (5) von dem Rahmen (3) zu trennen.

6. Verfahren nach einem der Ansprüche 1 bis 5, wobei die Fenderanordnung (1) weiter Folgendes umfasst:
eine Basis (9), die an dem Anlegebauwerk angebracht ist, wobei das Fenderelement (11) zwischen dem Rahmen (3) und der Basis (9) angebracht ist;
eine oder mehrere Tragketten (15), wobei jede Tragkette (15) mit einer an dem Rahmen (3) bereitgestellten rahmenseitigen Tragkettenhalterung (19) und einer an der Basis (9) bereitgestellten basisseitigen Tragkettenhalterung (21) verbunden ist und sich dazwischen erstreckt;
eine oder mehrere rahmenseitige Lockerungsvorrichtungshalterungen (25), wobei die rahmenseitigen Lockerungsvorrichtungshalterungen (25) jeweils einer rahmenseitigen Tragkettenhalterung (19) entsprechen; und
eine oder mehrere basisseitige Lockerungsvorrichtungshalterungen (27), wobei die basisseitigen Lockerungsvorrichtungshalterungen (25) jeweils einer basisseitigen Tragkettenhalterung (21) entsprechen; und wobei das Verfahren weiter Folgendes umfasst:
Aktivieren einer zwischen einer rahmenseitigen Lockerungsvorrichtungshalterung (25) und einer basisseitigen Lockerungsvorrichtungshalterung (27) angebrachten Lockerungsvorrichtung (163), um den Rahmen (3) und die Basis (9) zusammenzuziehen und dadurch eine Tragkette (15) zu lockern,
Entfernen der gelockerten Tragkette (15) aus ihrer jeweiligen rahmenseitigen und basisseitigen Tragkettenhalterung;
Anbringen einer einsatzfähigen Tragkette an der jeweiligen rahmenseitigen und basisseitigen Tragkettenhalterung; und
Deaktivieren der Lockerungsvorrichtung (163).

7. Schiffsfenderanordnung (1) zum Anbringen an einem Anlegebauwerk, wobei die Fenderanordnung Folgendes umfasst:
eine im Wesentlichen ebene Plattenanordnung (5) mit mindestens einem nach außen weisenden Verschleißklotz (7) für den Kontakt mit einem Schiff;
einen Rahmen (3) zum lösbaren Aufnehmen der Plattenanordnung (5), wobei der Rahmen (3) Folgendes umfasst:
ein Paar einander gegenüberliegender U-Profile (41), in denen die Plattenanordnung (5) schiebbar aufgenommen ist, wobei das Paar einander gegenüberliegender U-Profile (41) im Gebrauch im Wesentlichen senkrecht ist; und
ein Eingriffsteil (43) mit einer Lösekonfiguration, in der die Plattenanordnung (5) aus dem Paar einander gegenüberliegender C-Profile (41) entfernbar ist, und einer Eingriffskonfiguration, in der die Plattenanordnung (5) in dem Paar einander gegenüberliegender C-Profile (41) fixiert ist,
wobei die Fenderanordnung weiter ein elastisches Fenderelement (11) umfasst, das zwischen dem Rahmen (3) und dem Anlegebauwerk angebracht ist, wobei das elastische Fenderelement (11) zum Dämpfen von Kräften auf die Plattenanordnung (5) und/oder den Rahmen (3) dient.

8. Schiffsfenderanordnung nach Anspruch 7, wobei, wenn sich das Eingriffsteil (43) in der Lösekonfiguration befindet, die Plattenanordnung (5) aus dem Rahmen (3) entfernbar ist, ohne dass der Rahmen (3) oder das elastische Fenderelement (11) von dem Anlegebauwerk entfernt werden müssen.

9. Schiffsfenderanordnung nach Anspruch 7 oder 8, weiter umfassend einen Lösemechanismus (59), um die Trennung der Plattenanordnung (5) von dem Rahmen (3) zu ermöglichen.

10. Schiffsfenderanordnung nach Anspruch 9, wobei der Lösemechanismus (59) eine Lochplatte umfasst, die von der Plattenanordnung (5) getragen wird, und die sich, wenn die Plattenanordnung (5) in dem Rahmen (3) aufgenommen ist, derart über den Rahmen (3) erstreckt, dass eine Öffnung des Lochs (61) einer Eingriffsfläche (63) des Rahmens (3) zugewandt ist.

11. Schiffsfenderanordnung nach einem der Ansprüche 7 bis 10, wobei die Plattenanordnung (3) eine Vielzahl von nach außen weisenden Verschleißklötzen (7) umfasst, und wobei die Vielzahl von nach außen weisenden Verschleißklötzen (7) lösbar an der Plattenanordnung (3) angebracht ist.

12. Schiffsfenderanordnung nach einem der Ansprüche 7 bis 11, wobei die Rahmenanordnung zwei oder mehr Plattenanordnungen (5) aufnimmt, wobei die Plattenanordnungen (5) jeweils in einem Paar einander gegenüberliegender U-Profile (41) aufgenommen sind.

13. Schiffsfenderanordnung nach einem der Ansprüche 7 bis 12, wobei der Rahmen (3) weiter einen oder mehrere innere Verschleißklötze (37) umfasst, die einer nach innen weisenden Oberfläche (53) der Plattenanordnung zugewandt sind und auf dieser lasten.

14. Schiffsfenderanordnung nach einem der Ansprüche 7 bis 13, wobei das Eingriffsteil (43) eine Halteranordnung umfasst, die Folgendes umfasst:
einen ersten Halter (45), der an dem Rahmen (3) fixiert ist; und
einen zweiten Halter (46), der entfernbar an dem ersten Halter (45) befestigt werden kann, und wobei
in der Eingriffskonfiguration der zweite Halter (46) an dem ersten Halter (45) befestigt ist, um die Plattenanordnung (5) in dem Rahmen (3) in Position zu halten, und in der Lösekonfiguration der zweite Halter (46) von dem ersten Halter (45) gelöst ist, um zuzulassen, dass die Plattenanordnung (5) aus dem Rahmen (3) entfernt wird.

15. Schiffsfenderanordnung nach einem der Ansprüche 7 bis 14, wobei der Rahmen (3) einen rahmenseitigen Tragkettenverbinder (19) zum Verbinden einer Tragkette (15) mit dem Rahmen, und einen dem rahmenseitigen Tragkettenverbinder (19) entsprechenden rahmenseitigen Lockerungsvorrichtungsverbinder (25) umfasst, wobei der rahmenseitige Lockerungsvorrichtungsverbinder (25) zum Aufnehmen einer Halteketten-Lockerungsvorrichtung (23) dient, die betätigbar ist, um die Tragkette (15) zu lockern, um ihre Entfernung zuzulassen.

## Revendications

1. Procédé d'entretien se rapportant à un ensemble formant défense maritime (1) monté sur une structure de mouillage, l'ensemble formant défense maritime comportant :
un châssis (3) servant à recevoir de manière libérable un ensemble formant panneau (5), l'ensemble formant panneau (5) étant sensiblement plat et ayant au moins une plaque d'usure orientée vers l'extérieur (36) servant à des fins de contact avec un navire, le châssis (3) comportant :
une paire de profilés en U opposés (41) dans lesquels l'ensemble formant panneau (5) est reçu de manière coulissante, les profilés en U de la paire de profilés en U opposés (41) étant, lors de l'utilisation, sensiblement verticaux ; et
une pièce de mise en prise (43) ayant une configuration de libération ce par quoi l'ensemble formant panneau (5) est en mesure d'être retiré en provenance de la paire de profilés en U opposés (41) et une configuration de mise en prise ce par quoi l'ensemble formant panneau (5) est assujetti dans la paire de profilés en U opposés (41) ; et
un élément de défense élastique (11) monté entre le châssis (3) et la structure de mouillage, l'élément de défense élastique (11) servant à absorber des forces sur l'ensemble formant panneau (5) et/ou le châssis (3) ;
dans lequel le procédé comporte les étapes consistant à :
configurer la pièce de mise en prise (43) pour lui donner la configuration de libération ;
retirer un ensemble formant panneau existant (5) en provenance de la paire de profilés en U opposés (41) en faisant coulisser l'ensemble formant panneau existant (5) hors de la paire de profilés en U opposés (41) ;
positionner un ensemble formant panneau de remplacement dans la paire de profilés en U opposés (41) ;
configurer la pièce de mise en prise (43) pour lui donner la configuration de mise en prise pour assujettir l'ensemble formant panneau de remplacement sur le châssis (3),
dans lequel le procédé est effectué alors que le châssis (3) et l'ensemble formant défense (11) sont maintenus sur place montés sur la structure de mouillage.

2. Procédé selon la revendication 1, comportant par ailleurs l'étape consistant à :
remplacer une ou plusieurs plaques d'usure orientées vers l'extérieur usées (36) sur l'ensemble formant panneau existant (5) par une ou plusieurs plaques d'usure orientées vers l'extérieur de remplacement à des fins de mise en oeuvre au niveau de l'ensemble formant panneau de remplacement.

3. Procédé selon la revendication 1 ou la revendication 2, dans lequel l'ensemble formant panneau (5) est reçu de manière coulissante dans la paire de profilés en U opposés (41) le long d'un axe sensiblement vertical, et dans lequel :
l'étape consistant à retirer l'ensemble formant panneau existant (5) en provenance de la paire de profilés en U opposés comporte l'étape consistant à soulever l'ensemble formant panneau (5) dans une direction sensiblement verticale, et
l'étape consistant à positionner l'ensemble formant panneau de remplacement dans la paire de profilés en U opposés (41) comporte l'étape consistant à abaisser l'ensemble formant panneau de remplacement dans la paire de profilés en U opposés (41) dans une direction sensiblement verticale.

4. Procédé selon l'une quelconque des revendications 1 à 3, dans lequel la pièce de mise en prise comporte un ensemble formant support (43) comportant un premier support (45) fixé sur le châssis (3) et un deuxième support (46) en mesure d'être assujetti de manière amovible sur le premier support (45), et dans lequel :
l'étape consistant à configurer la pièce de mise en prise pour lui donner la configuration de libération comporte l'étape consistant à libérer le deuxième support (46) par rapport au premier support (45) ; et
l'étape consistant à configurer la pièce de mise en prise pour lui donner la configuration de mise en prise comporte l'étape consistant à assujettir le deuxième support (46) sur le premier support (45).

5. Procédé selon l'une quelconque des revendications 1 à 4, dans lequel l'ensemble formant défense (1) comporte par ailleurs un mécanisme de libération (59) servant à faciliter la séparation de l'ensemble formant panneau (5) par rapport au châssis (3), et dans lequel le procédé comporte par ailleurs l'étape consistant à faire fonctionner le mécanisme de libération (59) pour séparer l'ensemble formant panneau (5) par rapport au châssis (3).

6. Procédé selon l'une quelconque des revendications 1 à 5, dans lequel l'ensemble formant défense (1) comporte par ailleurs :
une base (9) montée sur la structure de mouillage, l'élément de défense (11) étant monté entre le châssis (3) et la base (9) ;
une ou plusieurs chaînes de support (15), chaque chaîne de support (15) étant raccordée et s'étendant entre une monture pour chaîne de support côté châssis (19) mise en oeuvre sur le châssis (3) et une monture pour chaîne de support côté base (21) mise en oeuvre sur la base (9) ;
une ou plusieurs montures pour détendeur côté châssis (25), chaque monture pour détendeur côté châssis (25) correspondant à une monture pour chaîne de support côté châssis (19) ; et
une ou plusieurs montures pour détendeur côté base (27), chaque monture pour détendeur côté base correspondant à une monture pour chaîne de support côté base (21) ; et dans lequel le procédé comporte par ailleurs les étapes consistant à :
activer un détendeur (163) fixé entre une monture pour détendeur côté châssis (25) et une monture pour détendeur côté base (27) pour rapprocher le châssis (3) et la base (9) ensemble, pour ainsi détendre une chaîne de support (15),
retirer la chaîne de support détendue (15) en provenance de ses montures pour chaîne de support côté châssis et côté base respectives ;
fixer une chaîne de support de remplacement sur les montures pour chaîne de support côté châssis et côté base respectives ; et
désactiver le détendeur (163).

7. Ensemble formant défense maritime (1) à des fins de montage sur une structure de mouillage, l'ensemble formant défense comportant :
un ensemble formant panneau sensiblement plat (5) ayant au moins une plaque d'usure orientée vers l'extérieur (7) servant à des fins de contact avec un navire ;
un châssis (3) servant à recevoir de manière libérable l'ensemble formant panneau (5), le châssis (3) comportant :
une paire de profilés en U opposés (41) dans lesquels l'ensemble formant panneau (5) est reçu de manière coulissante, les profilés en U de la paire de profilés en U opposés (41) étant, lors de l'utilisation, sensiblement verticaux ; et
une pièce de mise en prise (43) ayant une configuration de libération ce par quoi l'ensemble formant panneau (5) est en mesure d'être retiré en provenance de la paire de profilés en U opposés (41) et une configuration de mise en prise ce par quoi l'ensemble formant panneau (5) est assujetti dans la paire de profilés en U opposés (41),
l'ensemble formant défense comportant par ailleurs un élément de défense élastique (11) monté entre le châssis (3) et la structure de mouillage, l'élément de défense élastique (11) servant à absorber des forces sur l'ensemble formant panneau (5) et/ou le châssis (3).

8. Ensemble formant défense maritime selon la revendication 7, dans lequel, quand la pièce de mise en prise (43) est dans la configuration de libération, l'ensemble formant panneau (5) est en mesure d'être retiré en provenance du châssis (3) sans nécessiter le retrait du châssis (3) ou de l'élément de défense élastique (11) par rapport à la structure de mouillage.

9. Ensemble formant défense maritime selon la revendication 7 ou la revendication 8, comportant par ailleurs un mécanisme de libération (59) servant à faciliter la séparation de l'ensemble formant panneau (5) par rapport au châssis (3).

10. Ensemble formant défense maritime selon la revendication 9, dans lequel le mécanisme de libération (59) comporte une plaque à orifice portée par l'ensemble formant panneau (5) et qui, quand l'ensemble formant panneau (5) est reçu dans le châssis (3), s'étend sur le châssis (3) de telle sorte qu'une ouverture de l'orifice (61) est orientée vers une surface de mise en prise (63) du châssis (3).

11. Ensemble formant défense maritime selon l'une quelconque des revendications 7 à 10, dans lequel l'ensemble formant panneau (3) comporte une pluralité de plaques d'usure orientées vers l'extérieur (7), et dans lequel les plaques d'usure de la pluralité de plaques d'usure orientées vers l'extérieur (7) sont montées de manière libérable sur l'ensemble formant panneau (3).

12. Ensemble formant défense maritime selon l'une quelconque des revendications 7 à 11, dans lequel l'ensemble formant châssis reçoit deux ensembles formant panneau ou plus (5), chaque ensemble formant panneau (5) étant reçu dans une paire de profilés en U opposés (41).

13. Ensemble formant défense maritime selon l'une quelconque des revendications 7 à 12, dans lequel le châssis (3) comporte par ailleurs une ou plusieurs plaques d'usure intérieures (37) qui sont orientées et appuyées contre une surface orientée vers l'intérieur (53) de l'ensemble formant panneau (5).

14. Ensemble formant défense maritime selon l'une quelconque des revendications 7 à 13, dans lequel la pièce de mise en prise (43) comporte un ensemble formant support comportant :
un premier support (45) fixé sur le châssis (3) ; et
un deuxième support (46) en mesure d'être assujetti de manière amovible sur le premier support (45), et dans lequel
dans la configuration de mise en prise le deuxième support (46) est assujetti au niveau du premier support (45) pour retenir l'ensemble formant panneau (5) en position dans le châssis (3), et dans la configuration de libération le deuxième support (46) est libéré par rapport au premier support (45) pour permettre à l'ensemble formant panneau (5) d'être retiré en provenance du châssis (3).

15. Ensemble formant défense maritime selon l'une quelconque des revendications 7 à 14, dans lequel le châssis (3) comporte un connecteur pour chaîne de support côté châssis (19) servant à connecter une chaîne support (15) sur le châssis, et un connecteur pour détendeur côté châssis (25) correspondant au connecteur pour chaîne de support côté châssis (19), le connecteur pour détendeur côté châssis (25) servant à recevoir un détendeur de chaîne de support (23) servant à détendre la chaîne de support (15) pour en permettre le retrait.
